# EUROPEAN PATENT APPLICATION

(11) **EP 3 790 006 A1**
(43) Date of publication of application: **10.03.2021**
(21) Application number: 18924696.0
(22) Date of filing: 29.06.2018
(51) Int. Cl.: G10L 17/00, G06F 21/32

(54) **VOICE CONTROL METHOD, WEARABLE APPARATUS, AND TERMINAL**

(71) Applicant: HUAWEI TECHNOLOGIES CO., LTD., Shenzhen, Guangdong 518129 (CN)
(72) Inventor: ZHANG, Long, Shenzhen, Guangdong 518129 (CN); LI, Chunjian, Shenzhen, Guangdong 518129 (CN); QIU, Cunshou, Shenzhen, Guangdong 518129 (CN); CHANG, Qing, Shenzhen, Guangdong 518129 (CN)
(74) Representative: Thun, Clemens
(86) International application number: PCT/CN2018/093829
(87) International publication number: WO 2020/000427

(57) **Abstract**

Embodiments of this application disclose a voice control method, a wearable device, and a terminal, and relate to the terminal field, to improve accuracy and security of voiceprint recognition when a user uses a voice control terminal. The method includes: establishing, by a terminal, a communication connection to a wearable device; when a voicing user enters voice information to the wearable device, performing, by the terminal, identity authentication on the voicing user based on a first voiceprint recognition result of a first voice component in the voice information and a second voiceprint recognition result of a second voice component in the voice information, where the first voice component is collected by a first voice sensor of the wearable device, and the second voice component is collected by a second voice sensor of the wearable device; and if a result of the identity authentication performed by the terminal on the voicing user is that the voicing user is an authorized user, executing, by the terminal, an operation instruction corresponding to the voice information.

## Description

### TECHNICAL FIELD

This application relates to the terminal field, and in particular, to a voice control method, a wearable device, and a terminal.

### BACKGROUND

A voiceprint (voiceprint) is a sound wave spectrum carrying voice information when a user makes a sound, and can reflect an audio feature of the user. Because vocal organs (for example, a tongue, teeth, a larynx, a lung, and a nasal cavity) used by different persons during speaking are different in size and form, sound wave spectrums of any two persons are usually different. Therefore, one or more types of voice information may be analyzed through voiceprint recognition (speaker recognition, SR), to distinguish between unknown voices.

Currently, in a conventional voiceprint recognition manner, a conventional microphone is mainly used to collect a speaker's voice signal propagated by air, and a speaker's identity is further identified based on the collected speaker's voice signal. However, if the speaker is in a noisy environment, the collected speaker's voice signal has much noise, which easily interferes with accuracy of voiceprint recognition. In addition, if someone maliciously uses a speaker's recording to simulate the speaker's voice signal, a security risk of a terminal such as a mobile phone may increase because the terminal cannot accurately identify the voice signal

### SUMMARY

This application provides a voice control method, a wearable device, and a terminal, to improve accuracy and security of voiceprint recognition when a user uses a voice control terminal.

To achieve the foregoing objectives, the following technical solutions are used in this application.

According to a first aspect, this application provides a voice control method, including: establishing, by a terminal, a communication connection to a wearable device; when a voicing user enters voice information to the wearable device, performing, by the terminal, identity authentication on the voicing user based on a first voiceprint recognition result of a first voice component in the voice information and a second voiceprint recognition result of a second voice component in the voice information, where the first voice component is collected by a first voice sensor of the wearable device, and the second voice component is collected by a second voice sensor of the wearable device; and if a result of the identity authentication performed by the terminal on the voicing user is that the voicing user is an authorized user, executing, by the terminal, an operation instruction corresponding to the voice information.

It can be learned that when collecting the voice information of the voicing user, the wearable device collects two pieces of voice information (that is, the first voice component and the second voice component) by using two voice sensors. In this way, the terminal may separately perform voiceprint recognition on the two pieces of voice information. When voiceprint recognition results of the two pieces of voice information both match that of the authorized user, it may be determined that a current voicing user is the authorized user. It is clearly that compared with a voiceprint recognition process of one piece of voice information, the dual voiceprint recognition process of the two pieces of voice information can significantly improve accuracy and security during user identity authentication.

In addition, if the second voice component is collected by a bone conduction microphone of the wearable device, it indicates that the user wears the wearable device when making a sound. This avoids a case in which an unauthorized user maliciously controls a terminal of the authorized user by using a recording of the authorized user.

In a possible design method, before the performing, by the terminal, identity authentication on the voicing user based on a first voiceprint recognition result of a first voice component in the voice information and a second voiceprint recognition result of a second voice component in the voice information, the method further includes: obtaining, by the terminal, the first voiceprint recognition result and the second voiceprint recognition result from the wearable device, where the first voiceprint recognition result is obtained after the wearable device performs voiceprint recognition on the first voice component, and the second voiceprint recognition result is obtained after the wearable device performs voiceprint recognition on the second voice component. In other words, after collecting the first voice component and the second voice component in the voice information of the voicing user, the wearable device may locally perform voiceprint recognition on the two voice components separately, and further send the recognition results to the terminal. This can reduce implementation complexity of implementing voice control by the terminal.

In a possible design method, before the performing, by the terminal, identity authentication on the voicing user based on a first voiceprint recognition result of a first voice component in the voice information and a second voiceprint recognition result of a second voice component in the voice information, the method further includes: obtaining, by the terminal, the first voice component and the second voice component from the wearable device; and separately performing, by the terminal, voiceprint recognition on the first voice component and the second voice component, to obtain the first voiceprint recognition result corresponding to the first voice component and the second voiceprint recognition result corresponding to the second voice component. In other words, after collecting the first voice component and the second voice component in the voice information of the voicing user, the wearable device may send the two voice components to the terminal for voiceprint recognition. This reduces power consumption and implementation complexity of the wearable device.

In a possible design method, the separately performing, by the terminal, voiceprint recognition on the first voice component and the second voice component includes: performing, by the terminal, voiceprint recognition on the first voice component and the second voice component when the voice information includes a preset keyword; or performing, by the terminal, voiceprint recognition on the first voice component and the second voice component when a preset operation entered by the user is received. Otherwise, it indicates that the user does not need to perform voiceprint recognition at this time, and the terminal does not need to enable a voiceprint recognition function. This reduces power consumption of the terminal.

In a possible design method, the separately performing, by the terminal, voiceprint recognition on the first voice component and the second voice component includes: determining, by the terminal, whether the first voice component matches a first voiceprint model of an authorized user, where the first voiceprint model is used to reflect an audio feature that is of the authorized user and that is collected by the first voice sensor; and determining, by the terminal, whether the second voice component matches a second voiceprint model of the authorized user, where the second voiceprint model is used to reflect an audio feature that is of the authorized user and that is collected by the second voice sensor.

In this case, the performing, by the terminal, identity authentication on the voicing user based on a first voiceprint recognition result of a first voice component in the voice information and a second voiceprint recognition result of a second voice component in the voice information includes: if the first voice component matches the first voiceprint model of the authorized user, and the second voice component matches the second voiceprint model of the authorized user, determining, by the terminal, that the voicing user is an authorized user, or otherwise, determining, by the terminal, that the voicing user is an unauthorized user.

In a possible design method, the determining, by the terminal, whether the first voice component matches a first voiceprint model of an authorized user includes: calculating, by the terminal, a first degree of matching between the first voice component and the first voiceprint model of the authorized user; and if the first matching degree is greater than a first threshold, determining, by the terminal, that the first voice component matches the first voiceprint model of the authorized user; and the determining, by the terminal, whether the second voice component matches a second voiceprint model of the authorized user includes: calculating, by the terminal, a second degree of matching between the second voice component and the second voiceprint model of the authorized user; and if the second matching degree is greater than a second threshold, determining, by the terminal, that the second voice component matches the second voiceprint model of the authorized user.

In a possible design method, before the performing, by a terminal, identity authentication on the voicing user based on a first voiceprint recognition result of a first voice component in the voice information and a second voiceprint recognition result of a second voice component in the voice information, the method further includes: obtaining, by the terminal, an enabling instruction sent by the wearable device, where the enabling instruction is generated by the wearable device in response to a wake-up voice entered by the user; and enabling, by the terminal, a voiceprint recognition function in response to the enabling instruction.

In a possible design method, after the obtaining, by the terminal, the first voice component and the second voice component from the wearable device, the method further includes: determining, by the terminal based on the first voice component and the second voice component, whether the voice information includes a preset wake-up word; and enabling, by the terminal, a voiceprint recognition function if the voice information includes the preset wake-up word.

In other words, the user may trigger, by saying the wake-up word, the terminal to enable the voiceprint recognition function, or otherwise, it indicates that the user does not need to perform voiceprint recognition at this time, and the terminal does not need to enable the voiceprint recognition function. This reduces power consumption of the terminal.

In a possible design method, if the voicing user is an authorized user, the method further includes: automatically executing, by the terminal, an unlock operation. In this way, the user only needs to enter the voice information once to complete a series of operations such as user identity authentication, mobile phone unlocking, and enabling a function of the mobile phone. This greatly improves control efficiency of the user on the mobile phone and user experience.

In a possible design method, before the executing, by the terminal, an operation instruction corresponding to the voice information, the method further includes: obtaining, by the terminal, a device identifier of the wearable device; and the executing, by the terminal, an operation instruction corresponding to the voice information includes: if the device identifier of the wearable device is a preset authorized device identifier, executing, by the terminal, the operation instruction corresponding to the voice information. In this way, the terminal may receive and execute a related operation instruction sent by an authorized Bluetooth device, and when an unauthorized Bluetooth device sends an operation instruction to the terminal, the terminal may discard the operation instruction to improve security.

According to a second aspect, this application provides a voice control method, including: establishing, by a wearable device, a communication connection to a terminal; collecting, by the wearable device, a first voice component in voice information by using a first voice sensor; collecting, by the wearable device, a second voice component in the voice information by using a second voice sensor; and separately performing, by the wearable device, voiceprint recognition on the first voice component and the second voice component to perform identity authentication on a voicing user.

With reference to the second aspect, in a first possible design method of the second aspect, the first voice sensor is located on a side that is of the wearable device and that is not in contact with the user, and the second voice sensor is located on a side that is of the wearable device and that is in contact with the user. For example, the first voice sensor is an air conduction microphone, and the second voice sensor is a bone conduction microphone.

With reference to the first possible design method of the second aspect, in a second possible design method of the second aspect, before the collecting, by the wearable device, a first voice component in voice information by using a first voice sensor, the method further includes: detecting ambient light intensity by using an optical proximity sensor on the wearable device; detecting an acceleration value by using an acceleration sensor on the wearable device; and if the ambient light intensity is less than a preset light intensity threshold, or the acceleration value is greater than a preset acceleration threshold, or the ambient light intensity is less than the preset light intensity threshold and the acceleration value is greater than the preset acceleration threshold, determining that the wearable device is in a wearing state.

With reference to any one of the second aspect and the possible design methods of the second aspect, in a third possible design method of the second aspect, after the collecting, by the wearable device, a second voice component in the voice information by using a second voice sensor, the method further includes: performing, by the wearable device, voice activity detection (VAD) on the first voice component to obtain a first VAD value; and performing, by the wearable device, VAD on the second voice component to obtain a second VAD value; and the performing, by the wearable device, voiceprint recognition on the first voice component and the second voice component includes: performing voiceprint recognition on the first voice component and the second voice component when the first VAD value and the second VAD value each meet a preset condition.

With reference to any one of the second aspect and the possible design methods of the second aspect, in a fourth possible design method of the second aspect, the performing, by the wearable device, voiceprint recognition on the first voice component and the second voice component includes: performing, by the wearable device, voiceprint recognition on the first voice component and the second voice component when the voice information includes a preset keyword; or performing, by the wearable device, voiceprint recognition on the first voice component and the second voice component when a preset operation entered by the user is received.

With reference to any one of the second aspect and the possible design methods of the second aspect, in a fifth possible design method of the second aspect, the performing, by the wearable device, voiceprint recognition on the first voice component and the second voice component includes: determining, by the wearable device, whether the first voice component matches a first voiceprint model of an authorized user, where the first voiceprint model is used to reflect an audio feature that is of the authorized user and that is collected by the first voice sensor; and determining, by the wearable device, whether the second voice component matches a second voiceprint model of the authorized user, where the second voiceprint model is used to reflect an audio feature that is of the authorized user and that is collected by the second voice sensor; and
after the performing, by the wearable device, voiceprint recognition on the first voice component and the second voice component, the method further includes: if the first voice component matches the first voiceprint model of the authorized user, and the second voice component matches the second voiceprint model of the authorized user, determining, by the wearable device, that a voicing user is an authorized user, or otherwise, determining, by the wearable device, that the voicing user is an unauthorized user.

With reference to any fifth possible design method in the second aspect, in a sixth possible design method of the second aspect, the method further includes: collecting, by the wearable device by using the first voice sensor, a first registration component in a registration voice entered by the authorized user to establish the first voiceprint model of the authorized user; and collecting, by the wearable device by using the second voice sensor, a second registration component in the registration voice entered by the authorized user to establish the second voiceprint model of the authorized user.

With reference to any fifth or sixth possible design method in the second aspect, in a seventh possible design method of the second aspect, the determining, by the wearable device, whether the first voice component matches a first voiceprint model of an authorized user includes: calculating, by the wearable device, a first degree of matching between the first voice component and the first voiceprint model of the authorized user; and if the first matching degree is greater than a first threshold, determining, by the wearable device, that the first voice component matches the first voiceprint model of the authorized user; and the determining, by the wearable device, whether the second voice component matches a second voiceprint model of the authorized user includes: calculating, by the wearable device, a second degree of matching between the second voice component and the second voiceprint model of the authorized user; and if the second matching degree is greater than a second threshold, determining, by the wearable device, that the second voice component matches the second voiceprint model of the authorized user.

With reference to any one of the second aspect and the possible design methods of the second aspect, in an eighth possible design method of the second aspect, after the performing, by the wearable device, voiceprint recognition on the first voice component and the second voice component, the method further includes: sending, by the wearable device, an authentication success message or an unlock instruction to the terminal if the voicing user is an authorized user.

With reference to any one of the second aspect and the possible design methods of the second aspect, in a ninth possible design method of the second aspect, after the performing, by the wearable device, voiceprint recognition on the first voice component and the second voice component, the method further includes: if the voicing user is an authorized user, sending, by the wearable device, an operation instruction corresponding to the voice information to the terminal.

With reference to any one of the second aspect and the possible design methods of the second aspect, in a tenth possible design method of the second aspect, before the performing, by the wearable device, voiceprint recognition on the first voice component and the second voice component, the method further includes: performing, by the wearable device, noise reduction processing on the first voice component and the second voice component; and/or canceling, by the wearable device, an echo signal in each of the first voice component and the second voice component by using an echo cancellation algorithm.

With reference to any one of the second aspect and the possible design methods of the second aspect, in an eleventh possible design method of the second aspect, before the collecting, by the wearable device, a first voice component in voice information by using a first voice sensor, the method further includes: receiving, by the wearable device, a wake-up voice input by the user, where the wake-up voice includes a preset wake-up word; and sending, by the wearable device, an enabling instruction to the terminal in response to the wake-up voice, where the enabling instruction is used to instruct the terminal to enable a voiceprint recognition function.

According to a third aspect, this application provides a terminal, including a connection unit, an obtaining unit, a recognition unit, an authentication unit, and an execution unit. The connection unit is configured to establish a communication connection to a wearable device. The authentication unit is configured to: when a voicing user enters voice information to the wearable device, perform identity authentication on the voicing user based on a first voiceprint recognition result of a first voice component in the voice information and a second voiceprint recognition result of a second voice component in the voice information, where the first voice component is collected by a first voice sensor of the wearable device, and the second voice component is collected by a second voice sensor of the wearable device. The execution unit is configured to: if a result of the identity authentication performed by the terminal on the voicing user is that the voicing user is an authorized user, execute an operation instruction corresponding to the voice information.

In a possible design method, the obtaining unit is configured to obtain the first voiceprint recognition result and the second voiceprint recognition result from the wearable device, where the first voiceprint recognition result is obtained after the wearable device performs voiceprint recognition on the first voice component, and the second voiceprint recognition result is obtained after the wearable device performs voiceprint recognition on the second voice component.

In a possible design method, the obtaining unit is configured to obtain the first voice component and the second voice component from the wearable device, and the recognition unit is configured to separately perform voiceprint recognition on the first voice component and the second voice component, to obtain the first voiceprint recognition result corresponding to the first voice component and the second voiceprint recognition result corresponding to the second voice component.

In a possible design method, the recognition unit is specifically configured to: perform voiceprint recognition on the first voice component and the second voice component when the voice information includes a preset keyword; or perform voiceprint recognition on the first voice component and the second voice component when a preset operation entered by the user is received.

In a possible design method, the recognition unit is specifically configured to: determine whether the first voice component matches a first voiceprint model of an authorized user, where the first voiceprint model is used to reflect an audio feature that is of the authorized user and that is collected by the first voice sensor; and determine whether the second voice component matches a second voiceprint model of the authorized user, where the second voiceprint model is used to reflect an audio feature that is of the authorized user and that is collected by the second voice sensor; and the authentication unit is specifically configured to: if the first voice component matches the first voiceprint model of the authorized user, and the second voice component matches the second voiceprint model of the authorized user, determine that the voicing user is an authorized user, or otherwise, determine that the voicing user is an unauthorized user.

In a possible design method, the recognition unit is specifically configured to: calculate a first degree of matching between the first voice component and the first voiceprint model of the authorized user; if the first matching degree is greater than a first threshold, determine that the first voice component matches the first voiceprint model of the authorized user; calculate a second degree of matching between the second voice component and the second voiceprint model of the authorized user; and if the second matching degree is greater than a second threshold, determine that the second voice component matches the second voiceprint model of the authorized user.

In a possible design method, the obtaining unit is further configured to obtain an enabling instruction sent by the wearable device, where the enabling instruction is generated by the wearable device in response to a wake-up voice entered by the user, and the execution unit is further configured to enable a voiceprint recognition function in response to the enabling instruction.

In a possible design method, the recognition unit is further configured to determine, based on the first voice component and the second voice component, whether the voice information includes a preset wake-up word, and the execution unit is further configured to enable a voiceprint recognition function if the voice information includes the preset wake-up word.

In a possible design method, the execution unit is further configured to automatically perform an unlock operation if the voicing user is an authorized user.

In a possible design method, the obtaining unit is further configured to obtain a device identifier of the wearable device, and the execution unit is specifically configured to: if the device identifier of the wearable device is a preset authorized device identifier, execute the operation instruction corresponding to the voice information.

According to a fourth aspect, this application provides a wearable device, including a connection unit, a detection unit, a recognition unit, an authentication unit, and a sending unit. The connection unit is configured to establish a communication connection to a terminal. The detection unit is configured to collect a first voice component in voice information by using a first voice sensor, and the wearable device collects a second voice component in the voice information by using a second voice sensor. The recognition unit is configured to separately perform voiceprint recognition on the first voice component and the second voice component.

In a possible design method, the detection unit is further configured to: detect ambient light intensity by using an optical proximity sensor on the wearable device; detect an acceleration value by using an acceleration sensor on the wearable device; and if the ambient light intensity is less than a preset light intensity threshold, or the acceleration value is greater than a preset acceleration threshold, or the ambient light intensity is less than the preset light intensity threshold and the acceleration value is greater than the preset acceleration threshold, determine that the wearable device is in a wearing state.

In a possible design method, the detection unit is further configured to: perform voice activity detection (VAD) on the first voice component to obtain a first VAD value; and perform VAD on the second voice component to obtain a second VAD value; and the recognition unit is specifically configured to perform voiceprint recognition on the first voice component and the second voice component when the first VAD value and the second VAD value each meet a preset condition.

In a possible design method, the recognition unit is specifically configured to: perform voiceprint recognition on the first voice component and the second voice component when the voice information includes a preset keyword; or perform voiceprint recognition on the first voice component and the second voice component when a preset operation entered by the user is received.

In a possible design method, the recognition unit is specifically configured to: determine whether the first voice component matches a first voiceprint model of an authorized user, where the first voiceprint model is used to reflect an audio feature that is of the authorized user and that is collected by the first voice sensor; and determine whether the second voice component matches a second voiceprint model of the authorized user, where the second voiceprint model is used to reflect an audio feature that is of the authorized user and that is collected by the second voice sensor; and the authentication unit is specifically configured to: if the first voice component matches the first voiceprint model of the authorized user, and the second voice component matches the second voiceprint model of the authorized user, determine that the voicing user is an authorized user, or otherwise, determine that the voicing user is an unauthorized user.

In a possible design method, the recognition unit is specifically configured to: calculate a first degree of matching between the first voice component and the first voiceprint model of the authorized user; if the first matching degree is greater than a first threshold, determine that the first voice component matches the first voiceprint model of the authorized user; calculate a second degree of matching between the second voice component and the second voiceprint model of the authorized user; and if the second matching degree is greater than a second threshold, determine that the second voice component matches the second voiceprint model of the authorized user.

In a possible design method, the sending unit is further configured to send an authentication success message or an unlocking instruction to the terminal if the voicing user is an authorized user.

In a possible design method, the sending unit is further configured to: if the voicing user is an authorized user, send an operation instruction corresponding to the voice information to the terminal.

In a possible design method, the detection unit is further configured to detect a wake-up voice entered by the user, where the wake-up voice includes a preset wake-up word, and the sending unit is further configured to send an enabling instruction to the terminal, where the enabling instruction is used to instruct the terminal to enable a voiceprint recognition function.

According to a fifth aspect, this application provides a terminal, including a touchscreen, one or more processors, a memory, and one or more programs. The processor is coupled to the memory, and the one or more programs are stored in the memory. When the terminal runs, the processor executes the one or more programs stored in the memory, so that the terminal performs any one of the foregoing voice control methods.

According to a sixth aspect, this application provides a wearable device, including a first voice sensor disposed outside the wearable device and a second voice sensor disposed inside the wearable device, one or more processors, a memory, and one or more programs. The processor is coupled to the memory, and the one or more programs are stored in the memory. When the wearable device runs, the processor executes the one or more programs stored in the memory, so that the wearable device performs any one of the foregoing voice control methods.

According to a seventh aspect, this application provides a computer storage medium, including a computer instruction. When the computer instruction is run on a terminal, the terminal or a wearable device is enabled to perform the voice control method according to any one of the foregoing design methods.

According to an eighth aspect, this application provides a computer program product. When the computer program product runs on a computer, the computer is enabled to perform the voice control method according to any one of the first aspect or the possible implementations of the first aspect.

It may be understood that the terminal according to the third aspect and the fifth aspect, the wearable device according to the fourth aspect and the sixth aspect, the computer storage medium according to the seventh aspect, and the computer program product according to the eighth aspect are all used to perform the corresponding method provided above. Therefore, for advantageous effects that the terminal, the wearable device, the computer storage medium, and the computer program product can achieve, refer to advantageous effects in the corresponding methods provided above. Details are not described herein.

### BRIEF DESCRIPTION OF DRAWINGS

FIG. 1 is an architectural diagram 1 of a scenario of a voice control method according to an embodiment of this application;
FIG. 2 is a schematic structural diagram 1 of a wearable device according to an embodiment of this application;
FIG. 3 is a schematic structural diagram 1 of a terminal according to an embodiment of this application;
FIG. 4 is a schematic interaction diagram 1 of a voice control method according to an embodiment of this application;
FIG. 5 is an architectural diagram 2 of a scenario of a voice control method according to an embodiment of this application;
FIG. 6 is a schematic interaction diagram 2 of a voice control method according to an embodiment of this application;
FIG. 7(a) and FIG. 7(b) are an architectural diagram 3 of a scenario of a voice control method according to an embodiment of this application;
FIG. 8 is a schematic structural diagram 2 of a terminal according to an embodiment of this application;
FIG. 9 is a schematic structural diagram 2 of a wearable device according to an embodiment of this application; and
FIG. 10 is a schematic structural diagram of a terminal according to an embodiment of this application.

### DESCRIPTION OF EMBODIMENTS

The following describes the implementations of the embodiments of this application in detail with reference to accompanying drawings.

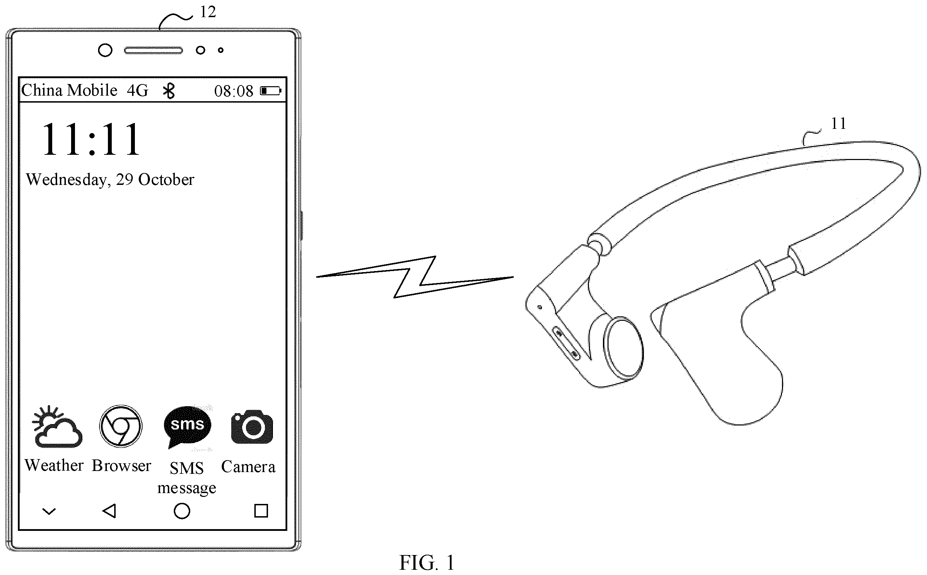

As shown in FIG. 1, a voice control method provided in an embodiment of this application may be applied to a voice control system including a wearable device 11 and a terminal 12.

The wearable device 11 may be a device that has a voice collection function, such as a wireless headset, a wired headset, smart glasses, a smart helmet, or a smart wristwatch. The terminal 12 may be a device such as a mobile phone, a tablet computer, a notebook computer, an ultra-mobile personal computer (Ultra-mobile Personal Computer, UMPC), or a personal digital assistant (Personal Digital Assistant, PDA). This is not limited in the embodiments of this application.

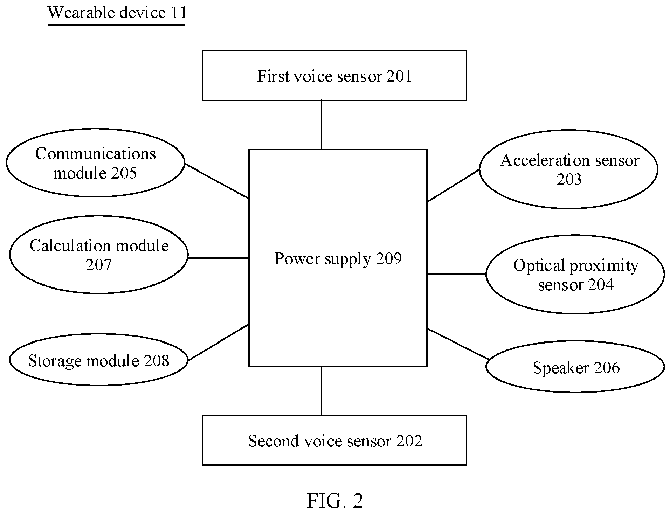

As shown in FIG. 2, the wearable device 11 may specifically include a first voice sensor 201 disposed outside the wearable device 11 and a second voice sensor 202 disposed inside the wearable device 11. An inside of the wearable device 11 refers to a side that is directly in contact with a user when the user uses the wearable device 11, and an outside of the wearable device 11 refers to a side that is not directly in contact with the user. For example, the first voice sensor 201 may be an air conduction microphone, and the second voice sensor 202 may be a sensor capable of collecting a vibration signal generated when the user makes a sound, such as a bone conduction microphone, an optical vibration sensor, an acceleration sensor, or an air conduction microphone. A manner of collecting voice information by the air conduction microphone is transmitting a vibration signal in vocalization to the microphone by using air. A manner of collecting voice information by the bone conduction microphone is transmitting a vibration signal in vocalization to the microphone by using a bone.

For example, the first voice sensor 201 is an air conduction microphone, and the second voice sensor 202 is a bone conduction microphone. In this embodiment of this application, when the user wearing the wearable device 11 speaks, the wearable device 11 may collect, by using the first voice sensor 201, voice information sent by the user after air propagation, may also collect, by using the second voice sensor 202, the voice information sent by the user after bone propagation.

In addition, there may be a plurality of first voice sensors 201 on the wearable device 11. For example, the first voice sensor 201 is an air conduction microphone. Two air conduction microphones may be disposed outside the wearable device 11, and the two air conduction microphones jointly collect voice information sent by the user after air propagation, to obtain a first voice component in the voice information. In addition, the bone conduction microphone may collect the voice information sent by the user after bone propagation, to obtain a second voice component in the voice information.

Still as shown in FIG. 2, the wearable device 11 may further include components such as an acceleration sensor 203 (where the acceleration sensor 203 may be also used as the second voice sensor 202), an optical proximity sensor 204, a communications module 205, a speaker 206, a calculation module 207, a storage module 208, and a power supply 209. It may be understood that the wearable device 11 may have more or fewer components than those shown in FIG. 2, may combine two or more components, or may have different component configurations. Various components shown in FIG. 2 may be implemented in hardware, software, or a combination of hardware and software that includes one or more signal processing or application-specific integrated circuits.

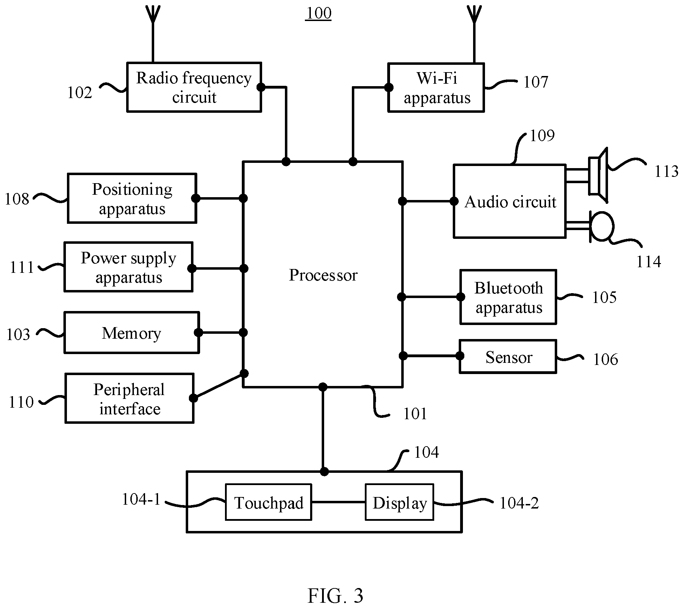

As shown in FIG. 3, the terminal 12 in the voice control system may be specifically a mobile phone 100. As shown in FIG. 3, the mobile phone 100 may specifically include: components such as a processor 101, a radio frequency (radio frequency, RF) circuit 102, a memory 103, a touchscreen 104, a Bluetooth apparatus 105, one or more sensors 106, a Wi-Fi apparatus 107, a positioning apparatus 108, an audio circuit 109, a peripheral interface 110, and a power supply apparatus 111. These components may communicate by using one or more communications buses or signal cables (not shown in FIG. 3). A person skilled in the art may understand that a hardware structure shown in FIG. 3 does not constitute a limitation on the mobile phone 100. The mobile phone 100 may include more or fewer components than those shown in the figure, or combine some components, or have different component arrangements.

The following describes in detail the components of the mobile phone 100 with reference to FIG. 3.

The processor 101 is a control center of the mobile phone 100. The processor 101 is connected to parts of the mobile phone 100 by using various interfaces and cables, runs or executes an application program stored in the memory 103, and invokes data and an instruction stored in the memory 103, to perform various functions of the mobile phone 100 and process data. In some embodiments, the processor 101 may include one or more processing units. The processor 101 may further integrate an application processor and a modem processor. The application processor mainly processes an operating system, a user interface, an application program, and the like. The modem processor mainly processes wireless communication. It may be understood that the modem processor may alternatively not be integrated into the processor 101. For example, the processor 101 may be a Kirin 960 multi-core processor manufactured by Huawei Technologies Co., Ltd.

The radio frequency circuit 102 may be configured to receive and send a radio signal in an information receiving and sending process or a call process. Specifically, after receiving downlink data from a base station, the radio frequency circuit 102 may send the downlink data to the processor 101 for processing, and sends related uplink data to the base station. Generally, the radio frequency circuit includes but is not limited to an antenna, at least one amplifier, a transceiver, a coupler, a low noise amplifier, a duplexer, and the like. In addition, the radio frequency circuit 102 may further communicate with another device through wireless communication. The wireless communication may use any communications standard or protocol, including but not limited to the global system for mobile communications, general packet radio service, code division multiple access, wideband code division multiple access, long term evolution, email, messaging service, and the like.

The memory 103 is configured to store an application program and data. The processor 101 runs the application program and the data that are stored in the memory 103, to execute various functions of the mobile phone 100 and process data. The memory 103 mainly includes a program storage area and a data storage area. The program storage area may store an operating system, and an application program required by at least one function (for example, a sound playing function or an image playing function). The data storage area may store data (for example, audio data or a phone book) created based on use of the mobile phone 100. In addition, the memory 103 may include a highspeed random access memory, and may further include a non-volatile memory such as a magnetic disk storage device, a flash memory device, or another volatile solid-state storage device. The memory 103 may store various operating systems such as an IOS® operating system developed by Apple and an ANDROID® operating system developed by Google.

The touchscreen 104 may include a touch-sensitive surface 104-1 and a display 104-2.

The touch-sensitive surface 104-1 (for example, a touch panel) may collect a touch event performed by a user of the mobile phone 100 on or near the touch-sensitive surface 104-1 (for example, an operation performed by the user on the touch-sensitive surface 104-1 or near the touch-sensitive surface 104-1 by using any proper object such as a finger or a stylus), and send collected touch information to another component, for example, the processor 101. The touch event performed by the user near the touch-sensitive surface 104-1 may be referred to as a floating touch. The floating touch may mean that the user does not need to directly touch the touchpad for selecting, moving, or dragging an object (for example, an icon), and the user only needs to be near the terminal to execute a desired function. In an application scenario of the floating touch, terms such as "touch" and "contact" do not imply a direct contact with the touchscreen, but a contact near or close to the touchscreen. The touch-sensitive surface 104-1 on which the floating touch can be performed may be implemented in a capacitive type, an infrared light sensing type, an ultrasonic wave type, or the like. The touch-sensitive surface 104-1 may include two parts: a touch detection apparatus and a touch controller. The touch detection apparatus detects a touch orientation of the user, detects a signal generated by a touch operation, and transmits the signal to the touch controller. The touch controller receives touch information from the touch detection apparatus, converts the touch information into touchpoint coordinates, and sends the touchpoint coordinates to the processor 101. The touch controller may further receive an instruction sent by the processor 101, and execute the instruction. In addition, the touch-sensitive surface 104-1 may be implemented in a plurality of types, such as a resistive type, a capacitive type, an infrared type, and a surface acoustic wave type.

The display (also referred to as a display screen) 104-2 may be configured to display information entered by the user or information provided for the user, and various menus of the mobile phone 100. The display 104-2 may be configured in a form such as a liquid crystal display or an organic light emitting diode. The touch-sensitive surface 104-1 may cover the display 104-2. After detecting a touch event on or near the touch-sensitive surface 104-1, the touch-sensitive surface 104-1 transmits the touch event to the processor 101 to determine a type of the touch event. Then, the processor 101 may provide corresponding visual output on the display 104-2 based on the type of the touch event. Although in FIG. 3, the touch-sensitive surface 104-1 and the display screen 104-2 are used as two independent parts to implement input and output functions of the mobile phone 100, in some embodiments, the touch-sensitive surface 104-1 and the display screen 104-2 may be integrated to implement the input and output functions of the mobile phone 100. It can be understood that the touchscreen 104 is formed by stacking a plurality of layers of materials. Only the touch-sensitive surface (layer) and the display screen (layer) are presented in the embodiments of this application, and other layers are not recorded in the embodiments of this application. In addition, in some other embodiments of this application, the touch-sensitive surface 104-1 may cover the display 104-2, and a size of the touch-sensitive surface 104-1 is greater than a size of the display screen 104-2. Therefore, the display screen 104-2 is entirely covered by the touch-sensitive surface 104-1. Alternatively, the touch-sensitive surface 104-1 may be configured on the front of the mobile phone 100 in a full panel form, in other words, any touch performed by the user on the front of the mobile phone 100 can be sensed by the mobile phone. In this way, full touch control experience on the front of the mobile phone can be implemented. In some other embodiments, the touch-sensitive surface 104-1 is configured on the front of the mobile phone 100 in the full panel form, and the display screen 104-2 may also be configured on the front of the mobile phone 100 in the full panel form. In this way, a bezel-less structure can be implemented on the front of the mobile phone. In some other embodiments of this application, the touchscreen 104 may further include one or more groups of sensor arrays, so that the touchscreen 104 may also sense pressure and the like applied by the user on the touchscreen 104 while sensing a touch event performed by the user on the touchscreen 104.

The mobile phone 100 may further include the Bluetooth apparatus 105, configured to implement data exchange between the mobile phone 100 and another short-distance terminal (for example, the wearable device 11). In the embodiments of this application, the Bluetooth apparatus may be an integrated circuit, a Bluetooth chip, or the like.

The mobile phone 100 may further include at least one type of the sensor 106, such as a light sensor, a motion sensor, and another sensor. Specifically, the optical sensor may include an ambient light sensor and a proximity sensor. The ambient light sensor may adjust luminance of the display of the touchscreen 104 based on brightness of ambient light, and the proximity sensor may power off the display when the mobile phone 100 moves to an ear. As one type of the motion sensor, an accelerometer sensor may detect acceleration values in various directions (usually on three axes). The accelerometer sensor may detect a value and a direction of gravity when the accelerometer sensor is stationary, and may be applied to an application for recognizing a mobile phone posture (such as switching between landscape mode and portrait mode, a related game, and magnetometer posture calibration), a function related to vibration recognition (such as a pedometer and a knock), and the like. Other sensors such as a fingerprint recognition component, a gyroscope, a barometer, a hygrometer, a thermometer, and an infrared sensor may be further configured on the mobile phone 100. Details are not described herein.

The Wi-Fi apparatus 107 is configured to provide, for the mobile phone 100, network access that complies with a Wi-Fi-related standard protocol. The mobile phone 100 may access a Wi-Fi access point by using the Wi-Fi apparatus 107, to help the user to receive and send an email, browse a web page, access streaming media, and the like. The Wi-Fi apparatus 107 provides wireless broadband internet access for the user. In some other embodiments, the Wi-Fi apparatus 107 may be used as a Wi-Fi wireless access point, and may provide another terminal with Wi-Fi network access.

The positioning apparatus 108 is configured to provide a geographical location for the mobile phone 100. It can be understood that the positioning apparatus 108 may be specifically a receiver of a positioning system, such as a global positioning system (global positioning system, GPS) or a BeiDou navigation satellite system. After receiving the geographical location sent by the positioning system, the positioning apparatus 108 sends the information to the processor 101 for processing, or sends the information to the memory 103 for storage. In some other embodiments, the positioning apparatus 108 may be a receiver of an assisted global positioning system (assisted global positioning system, AGPS). The AGPS runs in a manner in which GPS positioning is performed with specific assistance. By using a signal of a base station together with a GPS satellite signal, the AGPS can enable a positioning speed of the mobile phone 100 to be higher. In the AGPS system, the positioning apparatus 108 may obtain positioning assistance through communication with an assisted positioning server (for example, a mobile phone positioning server). The AGPS system is used as an assisted server to assist the positioning apparatus 108 in completing ranging and positioning services. In this case, the assisted positioning server provides positioning assistance by communicating with a terminal such as the positioning apparatus 108 (a GPS receiver) of the mobile phone 100 by using a wireless communications network.

The audio circuit 109, a speaker 113, and a microphone 114 may provide an audio interface between the user and the mobile phone 100. The audio circuit 109 may convert received audio data into an electrical signal and then transmit the electrical signal to the speaker 113, and the speaker 113 converts the electrical signal into a sound signal for output. In addition, the microphone 114 converts a collected sound signal into an electrical signal. The audio circuit 109 receives the electrical signal, converts the electrical signal into audio data, and then outputs the audio data to the RF circuit 102, to send the audio data to, for example, another mobile phone, or outputs the audio data to the memory 103 for further processing.

The peripheral interface 110 is configured to provide various interfaces for an external input/output device (for example, a keyboard, a mouse, an external display, an external memory, or a subscriber identity module card). For example, the mobile phone 100 is connected to the mouse by using a universal serial bus interface, and is electrically connected, by using a metal contact on a card slot of the subscriber identity module card, to the subscriber identity module (subscriber identity module, SIM) card provided by a telecommunications operator. The peripheral interface 110 may be configured to couple the external input/output peripheral device to the processor 101 and the memory 103.

The mobile phone 100 may further include the power supply apparatus 111 (for example, a battery and a power supply management chip) that supplies power to the components. The battery may be logically connected to the processor 101 by using the power supply management chip, so that functions such as charging, discharging, and power consumption management are implemented by using the power supply apparatus 111.

Although not shown in FIG. 3, the mobile phone 100 may further include a camera, a flash, a micro projection apparatus, a near field communication (near field communication, NFC) apparatus, and the like. Details are not described herein.

With reference to FIG. 1 to FIG. 3, for example, the wearable device 11 is a Bluetooth headset and the terminal 12 is a mobile phone. The Bluetooth headset and the mobile phone may communicate with each other by using a Bluetooth connection. In this embodiment of this application, the user may enter voice information to the Bluetooth headset when wearing the Bluetooth headset. In this case, the Bluetooth headset may separately collect the voice information by using the externally disposed first voice sensor 201 and the internally disposed second voice sensor 202. For example, the voice information collected by the first voice sensor 201 is a first voice component, and the voice information collected by the second voice sensor 202 is a second voice component.

In this way, the Bluetooth headset may separately perform voiceprint recognition on the first voice component and the second voice component, to obtain a first voiceprint recognition result corresponding to the first voice component and a second voiceprint recognition result corresponding to the second voice component. For example, the Bluetooth headset may pre-store a first voiceprint model and a second voiceprint model of an authorized user. The first voiceprint model is generated based on a registration voice that is entered by the authorized user to the first voice sensor 201 in advance. The second voiceprint model is generated based on a registration voice that is entered by the authorized user to the second voice sensor 202 in advance. In this case, the Bluetooth headset may match the first voiceprint model with the collected first voice component, and match the second voiceprint model with the collected second voice component.

When the first voice component matches the first voiceprint model, and the second voice component matches the second voiceprint model, it indicates that the voice information collected by the Bluetooth headset at this time is entered by the authorized user. For example, the Bluetooth headset may calculate, by using a specific algorithm, a first degree of matching between the first voice component and the first voiceprint model and a second degree of matching between the second voice component and the second voiceprint model. A higher matching degree indicates more similarity between the voice component and the corresponding voiceprint model, and a higher possibility that a voicing user is the authorized user. For example, when an average value of the first matching degree and the second matching degree is greater than 80 scores, the Bluetooth headset may determine that the first voice component matches the first voiceprint model, and the second voice component matches the second voiceprint model. Alternatively, when the first matching degree and the second matching degree each are greater than 85 scores, the Bluetooth headset may determine that the first voice component matches the first voiceprint model, and the second voice component matches the second voiceprint model. Further, the Bluetooth headset may send, to the mobile phone, an operation instruction corresponding to the voice information, for example, an unlock instruction, a power-off instruction, or an instruction for calling a specific contact. In this way, the mobile phone can perform a corresponding operation based on the operation instruction, so that the user can control the mobile phone by using a voice.

Certainly, the Bluetooth headset may alternatively send the collected first voice component and the collected second voice component to the mobile phone. The mobile phone separately performs voiceprint recognition on the first voice component and the second voice component, and determines, based on recognition results, whether the user entering the voice information is the authorized user. If the user is the authorized user, the mobile phone may execute the operation instruction corresponding to the voice information.

The authorized user is a user that can pass an identity authentication measure preset by the mobile phone. For example, when the identity authentication measure preset by the terminal is entering a password, fingerprint recognition, and voiceprint recognition, a user who enters the password or pre-enters, in the terminal, fingerprint information and a voiceprint model on which user identity authentication is performed may be considered as the authorized user of the terminal. Certainly, there may be one or more authorized users for one terminal, and any user other than the authorized user may be considered as an unauthorized user of the terminal. After passing a specific identity authentication measure, the unauthorized user may also be considered as the authorized user. This is not limited in the embodiments of this application.

It can be learned that in this embodiment of this application, when the user enters the voice information to the wearable device 11 to control the terminal 12, the wearable device 11 may collect voice information generated in an ear canal and voice information generated outside the ear canal when the user makes a sound. In this case, the wearable device 11 generates two pieces of voice information (that is, the first voice component and the second voice component). Therefore, the wearable device 11 (or the terminal 12) may separately perform voiceprint recognition on the two pieces of voice information. When voiceprint recognition results of the two pieces of voice information each match the voiceprint model of the authorized user, it may be determined that the user entering the voice information at this time is the authorized user. It is clearly that compared with a voiceprint recognition process of one piece of voice information, the dual voiceprint recognition process of the two pieces of voice information can significantly improve accuracy and security during user identity authentication.

In addition, because the wearable device 11 can collect, in this manner of bone conduction, the voice information entered by the user only after the user wears the wearable device 11, when the voice information collected by the wearable device 11 in this manner of bone conduction can pass voiceprint recognition, it is also noted that the voice information is generated when the authorized user wearing the wearable device 11 makes a sound. This avoids a case in which an unauthorized user maliciously controls a terminal of the authorized user by using a recording of the authorized user.

For ease of understanding, the following specifically describes, with reference to the accompanying drawings, a voice control method provided in the embodiments of this application. In the following embodiments, for example, a mobile phone is used as a terminal and a Bluetooth headset is used as a wearable device.

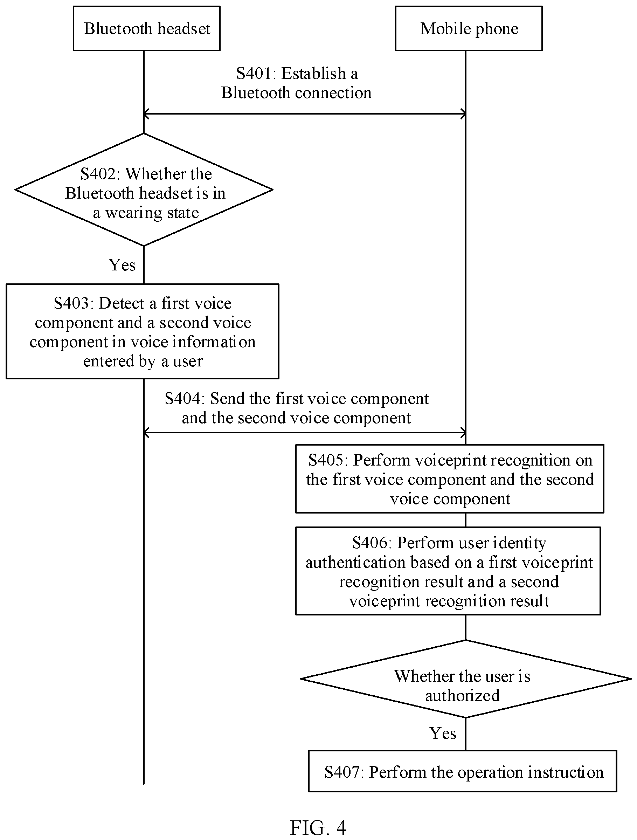

FIG. 4 is a schematic flowchart of a voice control method according to an embodiment of this application. As shown in FIG. 4, the voice control method may include the following steps.

S401: A mobile phone establishes a Bluetooth connection to a Bluetooth headset.

A user may enable a Bluetooth function of the Bluetooth headset when wanting to use the Bluetooth headset. In this case, the Bluetooth headset may send outside a pairing broadcast. If a Bluetooth function is enabled on the mobile phone, the mobile phone may receive the pairing broadcast and notify the user that a related Bluetooth device is scanned. After the user selects the Bluetooth headset on the mobile phone, the mobile phone may pair with the Bluetooth headset and establish the Bluetooth connection. Subsequently, the mobile phone and the Bluetooth headset may communicate with each other by using the Bluetooth connection. Certainly, if the mobile phone and the Bluetooth headset are successfully paired before the current Bluetooth connection is established, the mobile phone may automatically establish a Bluetooth connection to the Bluetooth headset found by scanning.

In addition, if the user expects that a used headset has a Wi-Fi function, the user may operate the mobile phone to establish a Wi-Fi connection to the headset. Alternatively, if the user expects that a used headset is a wired headset, the user inserts a headset cable plug into a corresponding headset interface of the mobile phone to establish a wired connection. This is not limited in the embodiments of this application.

S402 (optional): The Bluetooth headset detects whether the Bluetooth headset is in a wearing state.

As shown in FIG. 2, an optical proximity sensor and an acceleration sensor may be disposed on the Bluetooth headset. The optical proximity sensor is disposed on a side in contact with the user when the user wears the Bluetooth headset. The optical proximity sensor and the acceleration sensor may be periodically enabled to obtain a currently detected measurement value.

After wearing the Bluetooth headset, the user blocks light emitted into the optical proximity sensor. Therefore, when light intensity detected by the optical proximity sensor is less than a preset light intensity threshold, the Bluetooth headset may determine that the Bluetooth headset is in the wearing state at this time. In addition, after the user wears the Bluetooth headset, the Bluetooth headset may move with the user. Therefore, when an acceleration value detected by the acceleration sensor is greater than a preset acceleration threshold, the Bluetooth headset may determine that the Bluetooth headset is in the wearing state at this time. Alternatively, when the light intensity detected by the optical proximity sensor is less than the preset light intensity threshold, if it is detected that the acceleration value detected by the acceleration sensor at this time is greater than the preset acceleration threshold, the Bluetooth headset may determine that the Bluetooth headset is in the wearing state at this time.

Further, because a second voice sensor (for example, a bone conduction microphone or an optical vibration sensor) collecting voice information in a bone conduction manner is further disposed on the Bluetooth headset, the Bluetooth headset may further collect, by using the second voice sensor, a vibration signal generated in a current environment. The Bluetooth headset is in direct contact with the user when being in the wearing state. Therefore, a vibration signal collected by the second voice sensor is stronger than that collected by the second voice sensor in a non-wearing state. In this case, if energy of the vibration signal collected by the second voice sensor is greater than an energy threshold, the Bluetooth headset may determine that the Bluetooth headset is in the wearing state. Alternatively, because a spectrum feature such as a harmonic and resonance that are in the vibration signal collected when the user wears the Bluetooth headset is significantly different from that collected when the Bluetooth headset is not worn, if the vibration signal collected by the second voice sensor meets a preset spectrum feature, the Bluetooth headset may determine that the Bluetooth headset is in the wearing state. This can reduce a probability that the Bluetooth headset cannot accurately detect a wearing status by using the optical proximity sensor or the acceleration sensor in a scenario in which the user puts the Bluetooth headset into a pocket and the like.

The energy threshold or the preset spectrum feature may be obtained through statistics collection after various vibration signals generated by sounds, motion, or the like made after a large quantity of users wear the Bluetooth headset are captured, and is quite different from an energy or a spectrum feature of a voice signal detected by the second voice sensor when the user does not wear the Bluetooth headset. In addition, because power consumption of a first voice sensor (for example, an air conduction microphone) outside the Bluetooth headset is usually relatively high, the first voice sensor does not need to be enabled before the Bluetooth headset detects that the Bluetooth headset is currently in the wearing state. After detecting that the Bluetooth headset is currently in the wearing state, the Bluetooth headset may enable the first voice sensor to collect voice information generated when the user makes a sound, to reduce power consumption of the Bluetooth headset.

After detecting that the Bluetooth headset is currently in the wearing state, the Bluetooth headset may continue to perform the following steps S403 to S407, or otherwise, the Bluetooth headset may enter a sleep state, and continue to perform the following steps S403 to S407 after detecting that the Bluetooth headset is currently in the wearing state. In other words, the Bluetooth headset may trigger, only when the Bluetooth headset detects that the user wears the Bluetooth headset, that is, the user has an intention to use the Bluetooth headset, a process in which the Bluetooth headset collects the voice information entered by the user, and performs voiceprint recognition and the like. This reduces power consumption of the Bluetooth headset. Certainly, step S402 is optional. To be specific, regardless of whether the user wears the Bluetooth headset, the Bluetooth headset may continue to perform the following steps S403 to S407. This is not limited in the embodiments of this application.

S403: If being in the wearing state, the Bluetooth headset collects, by using the first voice sensor, a first voice component in the voice information entered by the user, and collects a second voice component in the voice information by using the second voice sensor.

When determining that the Bluetooth headset is in the wearing state, the Bluetooth headset may enable a voice detection module to separately collect, by using the first voice sensor and the second voice sensor, the voice information entered by the user, to obtain the first voice component and the second voice component in the voice information. For example, the first voice sensor is an air conduction microphone, and the second voice sensor is a bone conduction microphone. In a process of using the Bluetooth headset, the user may enter voice information "Xiao E, pay by using WeChat". In this case, because the air conduction microphone is exposed in the air, the Bluetooth headset may receive, by using the air conduction microphone, a vibration signal (in other words, the first voice component in the voice information) generated by air vibration after the user makes a sound. In addition, because the bone conduction microphone can be in contact with an ear bone of the user through the skin, the Bluetooth headset may receive, by using the bone conduction microphone, a vibration signal (in other words, the second voice component in the voice information) generated by vibration of the ear bone and the skin after the user makes a sound.

In some embodiments of this application, after detecting the voice information entered by the user, the Bluetooth headset may further distinguish a voice signal and a background noise in the voice information by using a VAD (voice activity detection, voice activity detection) algorithm. Specifically, the Bluetooth headset may separately input the first voice component and the second voice component in the voice information into a corresponding VAD algorithm to obtain a first VAD value corresponding to the first voice component and a second VAD value corresponding to the second voice component. A VAD value may be used to reflect whether the voice information is a normal voice signal of the speaker or a noise signal. For example, the VAD value may be set to be in a range from 0 to 100. When the VAD value is greater than a VAD threshold, it indicates that the voice information is a normal voice signal of the speaker, or when the VAD value is less than the VAD threshold, it indicates that the voice information is a noise signal. For another example, the VAD value may be set to 0 or 1. When the VAD value is 1, it indicates that the voice information is a normal voice signal of the speaker, or when the VAD value is 0, it indicates that the voice information is a noise signal

In this case, the Bluetooth headset may determine, based on the two VAD values: the first VAD value and the second VAD value, whether the voice information is a noise signal. For example, when both the first VAD value and the second VAD value are 1, the Bluetooth headset may determine that the voice information is not a noise signal, but is a normal voice signal of the speaker. For another example, when the first VAD value and the second VAD value each are greater than a preset value, the Bluetooth headset may determine that the voice information is not a noise signal, but is a normal voice signal of the speaker.

In addition, when the second VAD value is 1 or the second VAD value is greater than the preset value, it may indicate to some extent that voice information collected at this time is sent by an alive user. Therefore, the Bluetooth headset may also determine, based on only the second VAD value, whether the voice information is a noise signal.

Voice activity detection is separately performed on the first voice component and the second voice component. If the Bluetooth headset determines that the voice information is a noise signal, the Bluetooth headset may discard the voice information. If the Bluetooth headset determines that the voice information is not a noise signal, the Bluetooth headset may continue to perform the following steps S404 to S407. In other words, only when the user enters valid voice information to the Bluetooth headset, the Bluetooth headset is triggered to perform a subsequent process such as voiceprint identification. This reduces power consumption of the Bluetooth headset.

In addition, after obtaining the first VAD value and the second VAD value respectively corresponding to the first voice component and the second voice component, the Bluetooth headset may further separately measure a noise value of the voice information by using a noise estimation algorithm (for example, a minimum statistics algorithm or a minima controlled recursive averaging algorithm). For example, the Bluetooth headset may set storage space specially used for storing the noise value, and after calculating a new noise value each time, the Bluetooth headset may update the new noise value to the storage space. In other words, a latest calculated noise value is always stored in the storage space.

In this way, after determining, by using the VAD algorithm, that the voice information is the valid voice information, the Bluetooth headset may separately perform noise reduction processing on the first voice component and the second voice component by using the noise value in the storage space, so that recognition results obtained when a subsequent Bluetooth headset (or a mobile phone) separately perform voiceprint recognition on the first voice component and the second voice component are more accurate.

S404: The Bluetooth headset sends the first voice component and the second voice component to the mobile phone by using the Bluetooth connection.

After obtaining the first voice component and the second voice component, the Bluetooth headset may send the first voice component and the second voice component to the mobile phone. Then, the mobile phone performs the following steps S705 to S707, to implement operations such as voiceprint recognition on the voice information entered by the user and user identity authentication.

S405: The mobile phone separately performs voiceprint recognition on the first voice component and the second voice component, to obtain a first voiceprint recognition result corresponding to the first voice component and a second voiceprint recognition result corresponding to the second voice component.

Voiceprint models of one or more authorized users may be pre-stored on the mobile phone. Each authorized user has two voiceprint models, one is a first voiceprint model established based on a voice feature of the user collected when the air conduction microphone (in other words, the first voice sensor) works, and the other is a second voiceprint model established based on a voice feature of the user collected when the bone conduction microphone (in other words, the second voice sensor) works.

There are two phases for establishing the first voiceprint model and the second voiceprint model. The first phase is a background model training phase. In the first phase, a developer may collect voices of related texts (for example, "Hello, Xiao E") generated when a large quantity of speakers wearing the Bluetooth headset make a sound. Further, after performing filtering and noise reduction on the voices of the related texts, the mobile phone may extract an audio feature (for example, a time-frequency noise spectrum graph, or a gammatone-like spectrogram) in a background sound, and a background model of voiceprint recognition is established by using a machine learning algorithm such as a GMM (gaussian mixed model, Gaussian mixture model), an SVM (support vector machines, support vector machine), or a deep neural network framework. The mobile phone or the Bluetooth headset may establish, based on the background model and a registration voice entered by a user, a first voiceprint model and a second voiceprint model belonging to the user. The deep neural network framework includes but is not limited to a DNN (deep neural network, deep neural network) algorithm, an RNN (recurrent neural network, recurrent neural network) algorithm, an LSTM (long short term memory, long short-term memory) algorithm, and the like.

The second phase is a process in which when the user uses a voice control function on the mobile phone for the first time, the first voiceprint model and the second voiceprint model belonging to the user are established by entering the registration voice. For example, when an authorized user 1 uses, for the first time, a voice assistant APP installed on the mobile phone, the voice assistant APP may prompt the user to wear a Bluetooth headset and say a registration voice "Hello, Xiao E". Similarly, because the Bluetooth headset includes an air conduction microphone and a bone conduction microphone, the Bluetooth headset may obtain a first registration component collected by using the air conduction microphone and a second registration component collected by using the bone conduction microphone that are in the registration voice. Further, after the Bluetooth headset sends the first registration component and the second registration component to the mobile phone, the mobile phone may separately extract an audio feature of the user 1 in the first registration component and the second registration component, and further input the audio feature of the user 1 into the background model. In this way, the first voiceprint model and the second voiceprint model of the user 1 are obtained. The mobile phone may locally store the first voiceprint model and the second voiceprint model of the authorized user 1, or may send the first voiceprint model and the second voiceprint model of the authorized user 1 to the Bluetooth headset for storage.

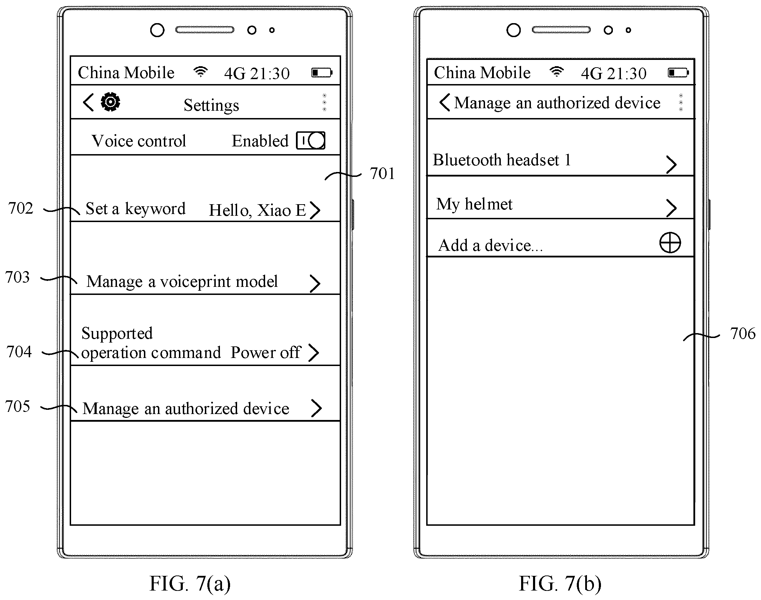

In addition, when the first voiceprint model and the second voiceprint model of the authorized user 1 are established, the mobile phone may further use the Bluetooth headset currently connected to the mobile phone as an authorized Bluetooth device. For example, the mobile phone may locally store an identifier (for example, a MAC address of the Bluetooth headset) of the authorized Bluetooth device. In this way, the mobile phone may receive and execute a related operation instruction sent by the authorized Bluetooth device, and when an unauthorized Bluetooth device sends an operation instruction to the mobile phone, the mobile phone may discard the operation instruction to improve security. One mobile phone can manage one or more authorized Bluetooth devices. As shown in FIG. 7(a), the user may access a setting screen 701 of a voiceprint recognition function from a setting function, and after clicking a setting button 705, the user may access a management screen 706 of an authorized device shown in FIG. 7(b). The user may add or delete an authorized Bluetooth device on the management screen 806 of the authorized device.

In step S405, after obtaining the first voice component and the second voice component in the voice information, the mobile phone may separately extract an audio feature of each of the first voice component and the second voice component, and then match the first voiceprint model of the authorized user 1 with the audio feature of the first voice component, and match the second voiceprint model of the authorized user 1 with the audio feature of the second voice component. For example, the mobile phone may calculate, by using a specific algorithm, a first matching degree (that is, a first voiceprint recognition result) between the first voiceprint model and the first voice component, and a second matching degree (that is, the second voiceprint recognition result) between the second voiceprint model and the second voice component. Usually, a higher matching degree indicates more similarity between the audio feature of the voice information and the audio feature of the authorized user 1, and a higher possibility that the user entering the voice information is the authorized user 1.

If the mobile phone stores voiceprint models of a plurality of authorized users, the mobile phone may further calculate one by one, according to the foregoing method, a first degree of matching between the first voice component and another authorized user (for example, an authorized user 2 or an authorized user 3), and a second degree of matching between the second voice component and the another authorized user. Further, the Bluetooth headset may determine an authorized user (for example, an authorized user A) with a highest matching degree as a current voicing user.

In addition, before performing voiceprint recognition on the first voice component and the second voice component, the mobile phone may further pre-determine whether voiceprint recognition needs to be performed on the first voice component and the second voice component. For example, if the Bluetooth headset or the mobile phone may identify a preset keyword from the voice information entered by the user, for example, a keyword related to user privacy or fund behavior such as "transfer", "payment", "**bank", or "chat record", it indicates that a security requirement of the user to control the mobile phone through a voice is relatively high at this time. Therefore, the mobile phone may perform step S405, that is, perform voiceprint recognition. For another example, if the Bluetooth headset receives a preset operation that is performed by the user and that is used to enable a voiceprint recognition function, for example, an operation of tapping the Bluetooth headset or simultaneously pressing a volume + button and a volume - button, it indicates that the user needs to verify a user identity through voiceprint recognition at this time. Therefore, the Bluetooth headset may instruct the mobile phone to perform step S405, that is, perform voiceprint recognition.

Alternatively, keywords corresponding to different security levels may be preset on the mobile phone. For example, a keyword at a highest security level includes "pay", "payment", or the like, a keyword at a relatively high security level includes "photographing", "calling", or the like, and a keyword at a lowest security level includes "listening to a song", "navigation", or the like.

In this way, when it is detected that the collected voice information includes the keyword at a highest security level, the mobile phone may be triggered to separately perform voiceprint recognition on the first voice component and the second voice component, in other words, perform voiceprint recognition on both the two collected voice sources, to improve security of voice controlling the mobile phone. When it is detected that the collected voice information includes the keyword at a relatively high security level, because a security requirement of voice controlling the mobile phone by the user is medium at this time, the mobile phone may be triggered to perform voiceprint recognition only on the first voice component or the second voice component. When it is detected that the collected voice information includes the keyword of a lowest security level, the mobile phone does not need to perform voiceprint recognition on the first voice component and the second voice component.

Certainly, if the voice information collected by the Bluetooth headset does not include the keyword, it indicates that the voice information collected at this time may be only voice information sent by the user during a normal conversation. Therefore, the mobile phone does not need to perform voiceprint recognition on the first voice component and the second voice component. This reduces power consumption of the mobile phone.

Alternatively, the mobile phone may further preset one or more wake-up words to wake up the mobile phone and enable the voiceprint recognition function. For example, the wake-up word may be "Hello, Xiao E". After the user enters voice information to the Bluetooth headset, the Bluetooth headset or the mobile phone may identify whether the voice information is a wake-up voice including the wake-up word. For example, the Bluetooth headset may send the first voice component and the second voice component in the collected voice information to the mobile phone. If the mobile phone further identifies that the voice information includes the wake-up word, the mobile phone may enable the voiceprint recognition function (for example, power on a voiceprint recognition chip). Subsequently, if the voice information collected by the Bluetooth headset includes the key word, the mobile phone may perform voiceprint recognition according to the method in step S405 by using the enabled voiceprint recognition function.

For another example, after collecting the voice information, the Bluetooth headset may further identify whether the voice information includes the wake-up word. If the voice information includes the wake-up word, it indicates that the user may subsequently need to use the voiceprint identification function. In this case, the Bluetooth headset may send an enabling instruction to the mobile phone, so that the mobile phone enables the voiceprint identification function in response to the enabling instruction.

S406: The mobile phone performs user identity authentication based on the first voiceprint recognition result and the second voiceprint recognition result.

In step S706, after obtaining, through voiceprint recognition, the first voiceprint recognition result corresponding to the first voice component and the second voiceprint recognition result corresponding to the second voice component, the mobile phone may perform, based on the two voiceprint recognition results, identity authentication on the user entering the voice information. Therefore, accuracy and security of user identity authentication are improved.

For example, the first degree of matching between the first voiceprint model of the authorized user and the first voice component is the first voiceprint recognition result, and the second degree of matching between the second voiceprint model of the authorized user and the second voice component is the second voiceprint recognition result. During user identity authentication, if the first matching degree and the second matching degree meet a preset authentication policy, for example, the authentication policy is that when the first matching degree is greater than a first threshold and the second matching degree is greater than a second threshold (the second threshold is the same as or different from the first threshold), the mobile phone determines that the user sending the first voice component and the second voice component is the authorized user, or otherwise, the mobile phone may determine that the user sending the first voice component and the second voice component is an unauthorized user.

For another example, the mobile phone may calculate a weighted average value of the first matching degree and the second matching degree. When the weighted average value is greater than a preset threshold, the mobile phone may determine that the user sending the first voice component and the second voice component is the authorized user, or otherwise, the mobile phone may determine that the user sending the first voice component and the second voice component is an unauthorized user.

Alternatively, the mobile phone may use different authentication policies in different voiceprint recognition scenarios. For example, when the collected voice information includes the keyword at a highest security level, the mobile phone may set both the first threshold and the second threshold to 99 scores. In this way, only when both the first matching degree and the second matching degree are greater than 99 scores, the mobile phone determines that the current voicing user is the authorized user. When the collected voice information includes a keyword at a relatively low security level, the mobile phone may set both the first threshold and the second threshold to 85 scores. In this way, when both the first matching degree and the second matching degree are greater than 85 scores, the mobile phone may determine that the current voicing user is the authorized user. In other words, for voiceprint recognition scenarios at different security levels, the mobile phone may use authentication policies at different security levels to perform user identity authentication.

In addition, if the mobile phone stores voiceprint models of a plurality of authorized users, for example, the mobile phone stores voiceprint models of an authorized user A, an authorized user B, and an authorized user C, the voiceprint model of each authorized user includes a first voiceprint model and a second voiceprint model. In this case, the mobile phone may separately match s collected first voice component and a collected second voice component with the voiceprint model of each authorized user according to the foregoing method. Further, the mobile phone may determine an authorized user (for example, the authorized user A) that meets the authentication policy and has a highest matching degree as a current voicing user.

In some other embodiments of this application, the voiceprint model that is of the authorized user and that is stored on the mobile phone may alternatively be established after the mobile phone combines the first registration component and the second registration component in the registration voice. In this case, each authorized user has a voiceprint model, and the voiceprint model can reflect an audio feature of a voice of the authorized user when the voice is transmitted through the air, and can also reflect an audio feature of the voice of the authorized user when the voice is transmitted through a bone.

In this way, after receiving the first voice component and the second voice component in the voice information sent by the Bluetooth headset, the mobile phone may perform voiceprint recognition after combining the first voice component and the second voice component, for example, the mobile phone calculates a degree of matching between the voiceprint model of the authorized user and a combination of the first voice component and the second voice component. Further, the mobile phone can also perform user identity authentication based on the matching degree. According to this identity authentication method, the voiceprint models of the authorized user are combined into one voiceprint model. Therefore, complexity of the voiceprint model and required storage space are reduced correspondingly. In addition, because information about the voiceprint feature of the second voice component is used, dual voiceprint assurance and a liveness detection function are also provided.

S407: If the user is the authorized user, the mobile phone executes an operation instruction corresponding to the voice information.

Through the authentication process in step S406, if the mobile phone determines that the voicing user entering the voice information in step S402 is the authorized user, the mobile phone may generate the operation instruction corresponding to the voice information. For example, when the voice information is "Xiao E, pay by using WeChat", the operation instruction corresponding to the voice information is displaying a payment screen of a WeChat APP. In this way, after generating the operation instruction for displaying the payment screen on the WeChat APP, the mobile phone may automatically enable the WeChat APP, and display the payment screen on the WeChat APP.

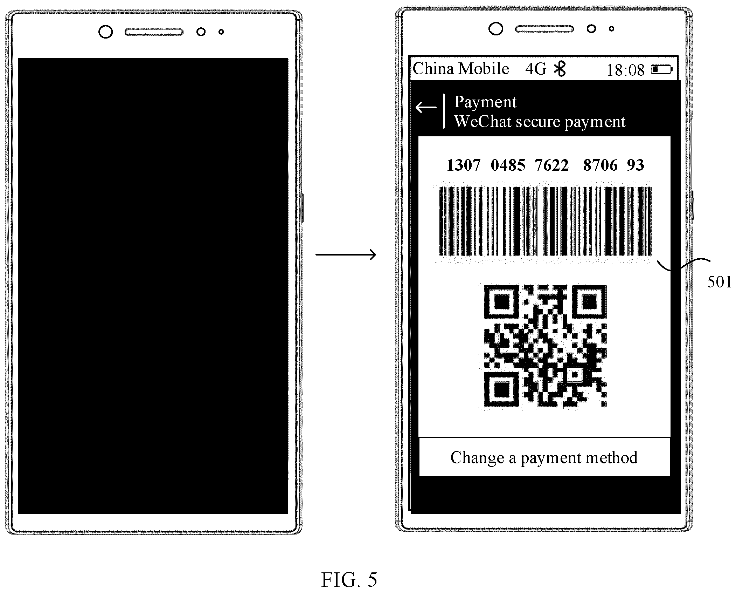

In addition, because the mobile phone determines that the user is the authorized user, as shown in FIG. 5, if the mobile phone is currently in a locked state, the mobile phone may further first unlock a screen, and then execute the operation instruction for displaying the payment screen on the WeChat APP, to display a payment screen 501 on the WeChat APP.

For example, the voice control method provided in steps S401 to S407 may be a function provided by the voice assistant APP. When the Bluetooth headset interacts with the mobile phone, if determining that the current voicing user is the authorized user through voiceprint recognition, the mobile phone may send data such as the generated operation instruction or the voice information to the voice assistant APP running at an application layer. Further, the voice assistant APP invokes a related interface or service at an application framework layer to execute the operation instruction corresponding to the voice information.

It can be learned that according to the voice control method provided in this embodiment of this application, the mobile phone may be unlocked and execute the operation instruction corresponding to the voice information while identifying the user identity by using a voiceprint. In other words, the user only needs to enter the voice information once to complete a series of operations such as user identity authentication, mobile phone unlocking, and enabling a function of the mobile phone. This greatly improves control efficiency of the user on the mobile phone and user experience.

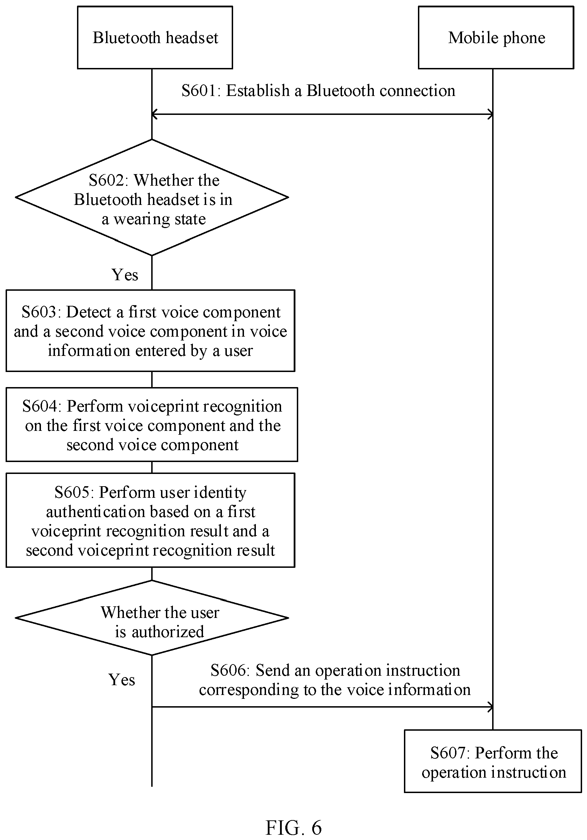

In steps S401 to S407, the mobile phone is used as an execution body to perform operations such as voiceprint recognition and user identity authentication. It may be understood that some or all of steps S401 to S407 may also be completed by the Bluetooth headset. This can reduce implementation complexity of the mobile phone and power consumption of the mobile phone. As shown in FIG. 6, the voice control method may include the following steps.

S601: A mobile phone establishes a Bluetooth connection to a Bluetooth headset.

S602 (optional): The Bluetooth headset detects whether the Bluetooth headset is in a wearing state.

S603: If being in the wearing state, the Bluetooth headset collects, by using a first voice sensor, a first voice component in voice information entered by a user, and collects a second voice component in the voice information by using a second voice sensor.

For specific methods in steps S601 to S603 for establishing the Bluetooth connection between the Bluetooth headset and the mobile phone, detecting whether the Bluetooth headset is in the wearing state, and detecting the first voice component and the second voice component in the voice information, refer to related descriptions of steps S401 to S403. Details are not described herein.

It should be noted that, after obtaining the first voice component and the second voice component, the Bluetooth headset may further perform operations such as VAD detection, noise reduction, or filtering on the detected first voice component and the detected second voice component. This is not limited in the embodiments of this application.

In some embodiments of this application, because the Bluetooth headset has an audio playback function, when a speaker of the Bluetooth headset is working, an air conduction microphone and a bone conduction microphone on the Bluetooth headset may receive an echo signal of a sound source played by the speaker. Therefore, after obtaining the first voice component and the second voice component, the Bluetooth headset may further cancel an echo signal in each of the first voice component and the second voice component by using an echo cancellation algorithm (for example, adaptive echo cancellation, AEC), to improve accuracy of subsequent voiceprint recognition.

S604: The Bluetooth headset separately performs voiceprint recognition on the first voice component and the second voice component, to obtain a first voiceprint recognition result corresponding to the first voice component and a second voiceprint recognition result corresponding to the second voice component.

Different from steps S401 to S407, in step S604, the Bluetooth headset may pre-stored voiceprint models of one or more authorized users. In this way, after obtaining the first voice component and the second voice component, the Bluetooth headset may perform voiceprint recognition on the first voice component and the second voice component by using the voiceprint models locally stored on the Bluetooth headset. For a specific method for separately performing voiceprint recognition on the first voice component and the second voice component by the Bluetooth headset, refer to the specific method for separately performing voiceprint recognition on the first voice component and the second voice component by the mobile phone in step S405. Details are not described herein.

S605: The Bluetooth headset performs user identity authentication based on the first voiceprint recognition result and the second voiceprint recognition result.

For a process in which the Bluetooth headset performs user identity authentication based on the first voiceprint recognition result and the second voiceprint recognition result, refer to related descriptions in step S406 that the mobile phone performs user identity authentication based on the first voiceprint recognition result and the second voiceprint recognition result. Details are not described herein.

S606: If the user is an authorized user, the Bluetooth headset sends an operation instruction corresponding to the voice information to the mobile phone by using the Bluetooth connection.

S607: The mobile phone executes the operation instruction.

If the Bluetooth headset determines that the voicing user entering the voice information is the authorized user, the Bluetooth headset may generate the operation instruction corresponding to the voice information. For example, when the voice information is "Xiao E, pay by using WeChat", the operation instruction corresponding to the voice information is displaying a payment screen of a WeChat APP. In this way, the Bluetooth headset may send, to the mobile phone by using the established Bluetooth connection, the operation instruction for displaying the payment screen on the WeChat APP. As shown in FIG. 5, after receiving the operation instruction, the mobile phone may automatically enable the WeChat APP, and display a payment screen 501 on the WeChat APP.

In addition, because the Bluetooth headset determines that the user is the authorized user, when the mobile phone is in a locked state, the Bluetooth headset may further send a success message of user identity authentication or an unlocking instruction to the mobile phone, so that the mobile phone may first unlock a screen, and then execute the operation instruction corresponding to the voice information. Certainly, the Bluetooth headset may also send the collected voice information to the mobile phone, and the mobile phone generates a corresponding operation instruction based on the voice information, and executes the operation instruction.

In some embodiments of this application, when sending the voice information or the corresponding operation instruction to the mobile phone, the Bluetooth headset may further send a device identifier (for example, a MAC address) of the Bluetooth headset to the mobile phone. Because the mobile phone stores an identifier of an authorized Bluetooth device passing authentication, the mobile phone may determine, based on the received device identifier, whether the currently connected Bluetooth headset is the authorized Bluetooth device. If the Bluetooth headset is the authorized Bluetooth device, the mobile phone may further execute the operation instruction sent by the Bluetooth headset, or perform an operation such as voice recognition on voice information sent by the Bluetooth headset; or otherwise, the mobile phone may discard the operation instruction sent by the Bluetooth headset. This avoids a security problem caused by malicious control of the mobile phone by an unauthorized Bluetooth device.

Alternatively, the mobile phone and the authorized Bluetooth device may pre-agree on a password or a password for transmitting the operation instruction. In this way, when sending the voice information or the corresponding operation instruction to the mobile phone, the Bluetooth headset may further send the pre-agreed password or password to the mobile phone, so that the mobile phone determines whether the currently connected Bluetooth headset is the authorized Bluetooth device.

Alternatively, the mobile phone and the authorized Bluetooth device may pre-agree on an encryption algorithm and a decryption algorithm used for transmitting the operation instruction. In this way, before sending the voice information or the corresponding operation instruction to the mobile phone, the Bluetooth headset may encrypt the operation instruction by using the agreed encryption algorithm. After receiving an encrypted operation instruction, if the mobile phone can decrypt the operation instruction by using the agreed decryption algorithm, it indicates that the currently connected Bluetooth headset is the authorized Bluetooth device, and the mobile phone may further execute the operation instruction sent by the Bluetooth headset; or otherwise, it indicates that the currently connected Bluetooth headset is an unauthorized Bluetooth device, and the mobile phone may discard the operation instruction sent by the Bluetooth headset.

It should be noted that steps S401 to S407 and steps S601 to S607 are merely two implementations of the voice control method provided in this application. It may be understood that a person skilled in the art may set, based on an actual application scenario or actual experience, which steps are performed by the Bluetooth headset and which steps are performed by the mobile phone in the foregoing embodiments. This is not limited in the embodiments of this application.

For example, after performing voiceprint recognition on the first voice component and the second voice component, the Bluetooth headset may also send the obtained first voiceprint recognition result and the obtained second voiceprint recognition result to the mobile phone, and subsequently the mobile phone performs an operation such as user identity authentication based on the voiceprint recognition result.

For another example, after obtaining the first voice component and the second voice component, the Bluetooth headset may pre-determine whether voiceprint recognition needs to be performed on the first voice component and the second voice component. If voiceprint recognition needs to be performed on the first voice component and the second voice component, the Bluetooth headset may send the first voice component and the second voice component to the mobile phone, so that the mobile phone completes subsequent operations such as voiceprint recognition and user identity authentication; or otherwise, the Bluetooth headset does not need to send the first voice component and the second voice component to the mobile phone. This avoids increasing power consumption of the mobile phone for processing the first voice component and the second voice component.

In addition, as shown in FIG. 7(a), the user may further access a setting screen 701 of the mobile phone to enable or disable the voice control function. If the user enables the voice control function, the user may set, by using a setting button 702, a keyword for triggering the voice control function, for example, "Xiao E" or "Pay", or the user may manage a voiceprint model of the authorized user by using a setting button 703, for example, add or delete the voiceprint model of the authorized user, or the user may set, by using a setting button 704, an operation instruction that can be supported by a voice assistant, for example, payment, making a call, or ordering a meal. In this way, the user can obtain customized voice control experience.

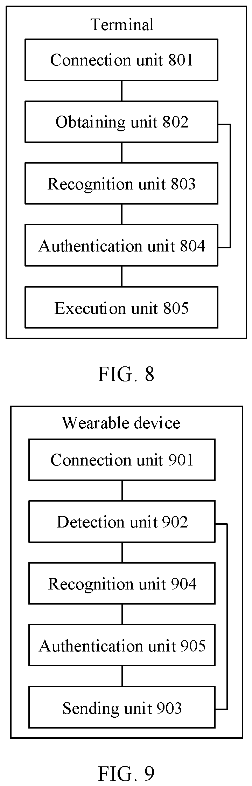

In some embodiments of this application, an embodiment of this application discloses a terminal. As shown in FIG. 8, the terminal is configured to implement the methods recorded in the foregoing method embodiments, and the terminal includes a connection unit 801, an obtaining unit 802, a recognition unit 803, an authentication unit 804, and an execution unit 805. The connection unit 801 is configured to support the terminal in performing the process S401 in FIG. 4 and the process S601 in FIG. 6. The obtaining unit 802 supports the terminal in performing the process S404 in FIG. 4 and the process S606 in FIG. 6. The recognition unit 803 is configured to support the terminal in performing the process S405 in FIG. 4. The authentication unit 804 is configured to support the terminal in performing the process S406 in FIG. 4. The execution unit 805 is configured to support the terminal in performing the process S407 in FIG. 4 and the process S607 in FIG. 6. All related content of the steps in the foregoing method embodiments may be cited in function descriptions of the corresponding functional modules. Details are not described herein.

In some embodiments of this application, an embodiment of this application discloses a wearable device. As shown in FIG. 9, the wearable device is configured to implement the methods recorded in the foregoing method embodiments, and the wearable device includes: a connection unit 901, a detection unit 902, a sending unit 903, a recognition unit 904, and an authentication unit 905. The connection unit 801 is configured to support the terminal in performing the process S401 in FIG. 4 and the process S601 in FIG. 6. The detection unit 902 is configured to support the terminal in performing the processes S402 and S403 in FIG. 4 and the processes S602 and S603 in FIG. 6. The recognition unit 904 is configured to support the terminal in performing the process S604 in FIG. 6. The authentication unit 905 is configured to support the terminal in performing the process S605 in FIG. 6. The sending unit 903 is configured to support the terminal in performing the process S404 in FIG. 4 and the process S606 in FIG. 6. All related content of the steps in the foregoing method embodiments may be cited in function descriptions of the corresponding functional modules. Details are not described herein.

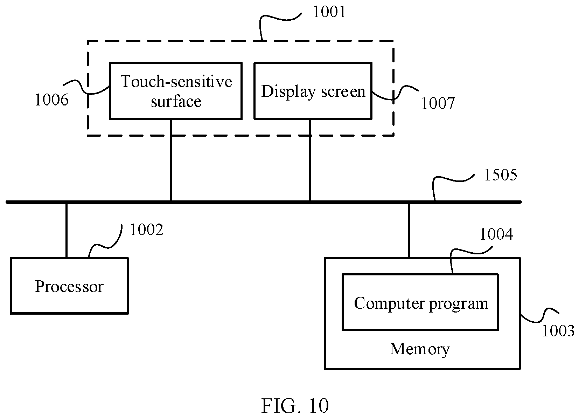

In some other embodiments of this application, an embodiment of this application discloses a terminal. As shown in FIG. 10, the terminal may include a touchscreen 1001, where the touchscreen 1001 includes a touch-sensitive surface 1006 and a display screen 1007, one or more processors 1002, a memory 1003, one or more applications (not shown), and one or more computer programs 1004. The foregoing components may be connected by using one or more communications buses 1005. The one or more computer programs 1004 are stored in the memory 1003 and configured to be executed by the one or more processors 1002. The one or more computer programs 1004 include an instruction. The instruction may be used to perform steps in FIG. 4, FIG. 6, and corresponding embodiments.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

Functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the embodiments of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A voice control method, comprising:
when a voicing user enters voice information to a wearable device, performing, by a terminal, identity authentication on the voicing user based on a first voiceprint recognition result of a first voice component in the voice information and a second voiceprint recognition result of a second voice component in the voice information, wherein the wearable device is in communication connection to the terminal, the first voice component is collected by a first voice sensor of the wearable device, and the second voice component is collected by a second voice sensor of the wearable device; and
if a result of the identity authentication performed by the terminal on the voicing user is that the voicing user is an authorized user, executing, by the terminal, an operation instruction corresponding to the voice information.

2. The voice control method according to claim 1, wherein before the performing, by a terminal, identity authentication on the voicing user based on a first voiceprint recognition result of a first voice component in the voice information and a second voiceprint recognition result of a second voice component in the voice information, the method further comprises:
obtaining, by the terminal, the first voiceprint recognition result and the second voiceprint recognition result from the wearable device, wherein the first voiceprint recognition result is obtained after the wearable device performs voiceprint recognition on the first voice component, and the second voiceprint recognition result is obtained after the wearable device performs voiceprint recognition on the second voice component.

3. The voice control method according to claim 1, wherein before the performing, by a terminal, identity authentication on the voicing user based on a first voiceprint recognition result of a first voice component in the voice information and a second voiceprint recognition result of a second voice component in the voice information, the method further comprises:
obtaining, by the terminal, the first voice component and the second voice component from the wearable device; and
separately performing, by the terminal, voiceprint recognition on the first voice component and the second voice component, to obtain the first voiceprint recognition result corresponding to the first voice component and the second voiceprint recognition result corresponding to the second voice component.

4. The voice control method according to claim 3, wherein the separately performing, by the terminal, voiceprint recognition on the first voice component and the second voice component comprises:
performing, by the terminal, voiceprint recognition on the first voice component and the second voice component when the voice information comprises a preset keyword; or
performing, by the terminal, voiceprint recognition on the first voice component and the second voice component when a preset operation entered by the user is received.

5. The voice control method according to claim 3 or 4, wherein the separately performing, by the terminal, voiceprint recognition on the first voice component and the second voice component comprises:
determining, by the terminal, whether the first voice component matches a first voiceprint model of an authorized user, wherein the first voiceprint model is used to reflect an audio feature that is of the authorized user and that is collected by the first voice sensor; and
determining, by the terminal, whether the second voice component matches a second voiceprint model of the authorized user, wherein the second voiceprint model is used to reflect an audio feature that is of the authorized user and that is collected by the second voice sensor; and
the performing, by a terminal, identity authentication on the voicing user based on a first voiceprint recognition result of a first voice component in the voice information and a second voiceprint recognition result of a second voice component in the voice information comprises:
if the first voice component matches the first voiceprint model of the authorized user, and the second voice component matches the second voiceprint model of the authorized user, determining, by the terminal, that the voicing user is an authorized user, or otherwise, determining, by the terminal, that the voicing user is an unauthorized user.

6. The voice control method according to claim 5, wherein the determining, by the terminal, whether the first voice component matches a first voiceprint model of an authorized user comprises:
calculating, by the terminal, a first degree of matching between the first voice component and the first voiceprint model of the authorized user; and
if the first matching degree is greater than a first threshold, determining, by the terminal, that the first voice component matches the first voiceprint model of the authorized user; and
the determining, by the terminal, whether the second voice component matches a second voiceprint model of the authorized user comprises:
calculating, by the terminal, a second degree of matching between the second voice component and the second voiceprint model of the authorized user; and
if the second matching degree is greater than a second threshold, determining, by the terminal, that the second voice component matches the second voiceprint model of the authorized user.

7. The voice control method according to any one of claims 1 to 6, wherein before the performing, by a terminal, identity authentication on the voicing user based on a first voiceprint recognition result of a first voice component in the voice information and a second voiceprint recognition result of a second voice component in the voice information, the method further comprises:
obtaining, by the terminal, an enabling instruction sent by the wearable device, wherein the enabling instruction is generated by the wearable device in response to a wake-up voice entered by the user; and
enabling, by the terminal, a voiceprint recognition function in response to the enabling instruction.

8. The voice control method according to any one of claims 3 to 6, wherein after the obtaining, by the terminal, the first voice component and the second voice component from the wearable device, the method further comprises:
determining, by the terminal based on the first voice component and the second voice component, whether the voice information comprises a preset wake-up word; and
enabling, by the terminal, a voiceprint recognition function if the voice information comprises the preset wake-up word.

9. The voice control method according to any one of claims 1 to 8, wherein if the voicing user is an authorized user, the method further comprises:
automatically executing, by the terminal, an unlock operation.

10. The voice control method according to any one of claims 1 to 9, wherein before the executing, by the terminal, an operation instruction corresponding to the voice information, the method further comprises:
obtaining, by the terminal, a device identifier of the wearable device; and
the executing, by the terminal, an operation instruction corresponding to the voice information comprises:
if the device identifier of the wearable device is a preset authorized device identifier, executing, by the terminal, the operation instruction corresponding to the voice information.

11. A terminal, comprising:
a touchscreen, wherein the touchscreen comprises a touch-sensitive surface and a display;
one or more processors;
one or more memories; and
one or more computer programs, wherein the one or more computer programs are stored in the one or more memories, the one or more computer programs comprise an instruction, and when the instruction is executed by the terminal, the terminal is enabled to perform the following steps:
when a voicing user enters voice information to a wearable device, performing identity authentication on the voicing user based on a first voiceprint recognition result of a first voice component in the voice information and a second voiceprint recognition result of a second voice component in the voice information, wherein the wearable device is in communication connection to the terminal, the first voice component is collected by a first voice sensor of the wearable device, and the second voice component is collected by a second voice sensor of the wearable device; and
if a result of the identity authentication performed on the voicing user is that the voicing user is an authorized user, executing an operation instruction corresponding to the voice information.

12. The terminal according to claim 11, wherein before the terminal performs identity authentication on the voicing user based on the first voiceprint recognition result of the first voice component in the voice information and the second voiceprint recognition result of the second voice component in the voice information, the terminal is further configured to:
obtain the first voiceprint recognition result and the second voiceprint recognition result from the wearable device, wherein the first voiceprint recognition result is obtained after the wearable device performs voiceprint recognition on the first voice component, and the second voiceprint recognition result is obtained after the wearable device performs voiceprint recognition on the second voice component.

13. The terminal according to claim 11, wherein before the terminal performs identity authentication on the voicing user based on the first voiceprint recognition result of the first voice component in the voice information and the second voiceprint recognition result of the second voice component in the voice information, the terminal is further configured to:
obtain the first voice component and the second voice component from the wearable device; and
separately perform voiceprint recognition on the first voice component and the second voice component, to obtain the first voiceprint recognition result corresponding to the first voice component and the second voiceprint recognition result corresponding to the second voice component.

14. The terminal according to claim 13, wherein that the terminal separately performs voiceprint recognition on the first voice component and the second voice component specifically comprises:
performing voiceprint recognition on the first voice component and the second voice component when the voice information comprises a preset keyword; or
performing voiceprint recognition on the first voice component and the second voice component when a preset operation entered by the user is received.

15. The terminal according to claim 13 or 14, wherein that the terminal separately performs voiceprint recognition on the first voice component and the second voice component specifically comprises:
determining whether the first voice component matches a first voiceprint model of an authorized user, wherein the first voiceprint model is used to reflect an audio feature that is of the authorized user and that is collected by the first voice sensor; and
determining whether the second voice component matches a second voiceprint model of the authorized user, wherein the second voiceprint model is used to reflect an audio feature that is of the authorized user and that is collected by the second voice sensor; and
that the terminal performs identity authentication on the voicing user based on a first voiceprint recognition result of a first voice component in the voice information and a second voiceprint recognition result of a second voice component in the voice information specifically comprises:
if the first voice component matches the first voiceprint model of the authorized user, and the second voice component matches the second voiceprint model of the authorized user, determining that the voicing user is an authorized user, or otherwise, determining that the voicing user is an unauthorized user.

16. The terminal according to claim 15, wherein the determining, by the terminal, whether the first voice component matches a first voiceprint model of an authorized user specifically comprises:
calculating a first degree of matching between the first voice component and the first voiceprint model of the authorized user; and
if the first matching degree is greater than a first threshold, determining that the first voice component matches the first voiceprint model of the authorized user; and
the determining, by the terminal, whether the second voice component matches a second voiceprint model of the authorized user specifically comprises:
calculating a second degree of matching between the second voice component and the second voiceprint model of the authorized user; and
if the second matching degree is greater than a second threshold, determining that the second voice component matches the second voiceprint model of the authorized user.

17. The terminal according to any one of claims 11 to 16, wherein before the terminal performs identity authentication on the voicing user based on the first voiceprint recognition result of the first voice component in the voice information and the second voiceprint recognition result of the second voice component in the voice information, the terminal is further configured to:
obtain an enabling instruction sent by the wearable device, wherein the enabling instruction is generated by the wearable device in response to a wake-up voice entered by the user; and
enable a voiceprint recognition function in response to the enabling instruction.

18. The terminal according to any one of claims 13 to 16, wherein after the terminal obtains the first voice component and the second voice component from the wearable device, the terminal is further configured to:
determine, based on the first voice component and the second voice component, whether the voice information comprises a preset wake-up word; and
enable a voiceprint recognition function if the voice information comprises the preset wake-up word.

19. The terminal according to any one of claims 11 to 18, wherein if the voicing user is an authorized user, the terminal is further configured to:
automatically execute an unlock operation.

20. The terminal according to any one of claims 11 to 19, wherein before the terminal executes the operation instruction corresponding to the voice information, the terminal is further configured to:
obtain a device identifier of the wearable device; and
the executing, by the terminal, an operation instruction corresponding to the voice information specifically comprises:
if the device identifier of the wearable device is a preset authorized device identifier, executing the operation instruction corresponding to the voice information.

21. A computer-readable storage medium, wherein the computer-readable storage medium stores an instruction, and when the instruction is run on a terminal, the terminal is enabled to perform the voice control method according to any one of claims 1 to 10.

22. A computer program product comprising an instruction, wherein when the computer program product runs on a terminal, the terminal is enabled to perform the voice control method according to any one of claims 1 to 10.
